# FASCICULE DE BREVET EUROPEEN

(11) **EP 0 571 310 B1**
(45) Date de publication et mention de la délivrance du brevet: **29.11.1995**
(21) Numéro de dépôt: 93490010.1
(22) Date de dépôt: 18.05.1993
(51) Int. Cl.: A23N 15/04

(54) **Pince pour le maintien d'un légume tel une endive portée par sa racine et machine pourvue d'au moins une telle pince**
Klemme zum Halten von Gemüse, zum Beispiel einer Endive, an dessen Wurtzel und Maschine mit wenigstens einer solchen Klemme
Clip to hold a vegetable, such as an endive, by its root and a machine equipped with at least one such clip

(30) Priorité: 20.05.1992 FR 9206450
(43) Date de publication de la demande: 24.11.1993
(73) Titulaire: SOCIETES REUNIES BRIFFOTEAUX, "S.R.B.", S.A., F-52290 Eclaron (FR)
(72) Inventeur: Darene, François, F-80400 Moyencourt (FR)
(74) Mandataire: Ecrepont, Robert

(56) Documents cités:
- DE-A- 1 914 075
- FR-A- 2 616 419
- FR-A- 2 623 695

## Description

L'invention se rapporte à une pince pour le maintien d'un légume tel une endive portée par sa racine.

Elle se rapporte également à une machine pourvue d'une telle pince et notamment à une machine pour parer des légumes.

Lorsque le légume est suffisamment mature, il est nécessaire de le séparer de son support à savoir la racine.

A cet effet, on connaît des machines pour parer des endives faisant appel à des dispositifs de séparation comprenant une lame ou un objet tranchant, lequel définit un plan de coupe.

On vient alors présenter le légume porté par sa racine de manière que son axe longitudinal soit sensiblement perpendiculaire au plan de coupe précité.

La coupe doit se faire à une certaine distance du plan de joint défini comme le plan matérialisant la séparation entre la racine et le légume qui, généralement et notamment dans le cas de l'endive, passe par le collet.

La distance précitée est fonction de la taille de la racine et notamment de son diamètre pris au niveau du collet.

Aussi, pour des endives de petite taille, la coupe doit être proche du collet tandis que pour une grosse endive, la coupe doit être réalisée un peu plus loin.

Il n'est bien sûr pas envisageable de présenter à la main chaque légume devant l'outil de coupe car, d'une part, cela serait excessivement dangereux et, d'autre part, cela serait trés fastidieux.

Au lieu de présenter à la main le légume, celui-ci est placé sur une pince, laquelle pince présente à un instant donné le légume face à l'objet tranchant.

Classiquement, une pince comporte un corps supportant deux machoires présentant chacune :
. deux surfaces dites de maintien, lesquelles sont disposées en vis à vis et viennent serrer localement et radialement la racine et définissent ainsi un plan de pincement,
. une butée limitant l'engagement de la racine entre les machoires de la pince et un support par lequel elle est fixée à un moyen de déplacement qui, dans son parcours, définit au moins localement et au moins indirectement un plan de référence parallèle au plan de coupe et distant de ce dernier d'une valeur prédéterminée.

Dans les solutions connues (FR-A-2.623.695), la personne qui place les légumes sur les pinces tente, en fonction de leur taille, de placer au mieux la racine sur la pince.

Le positionnement du légume n'est pas reproductible et dépend uniquement du savoir faire de la personne précitée.

On imagine donc trés facilement que, au cours de la journée, la qualité du positionnement va en decroissant.

On connaît également une agrafe (FR-A-2.014.426) du type "circlip" ayant une forme globale en U dont les branches sont prolongées par les machoires de la pince, lesquels prolongements sont à cet effet ramenés dans la cavité formée par le U de sorte que leurs extrémités libres soient tournées vers le fond de ce U.

Dans cette réalisation, les branches du U et les machoires sont situées dans un même plan.

Lorsque les machoires viennent enserrer un quelconque produit, le plan dans lequel agit le pincement reste confondu avec le plan défini par les branches de la partie en U et donc n'apporte pas de solution au problème posé.

Un des résultats que l'invention vise à obtenir est un dispositif de positionnement d'un légume qui, en rapport avec la taille de celui-ci, permette une séparation selon un plan dont la position est différenciée.

A cet effet, elle se rapporte à une pince du type précité notamment caractérisée en ce qu'elle est pourvue de moyens qui, lorsque le légume est pincé, induisent dans un plan perpendiculaire au plan de coupe le déplacement du plan de joint en fonction au moins dans une certaine plage de dimension de l'ouverture des machoires et donc du diamètre du légume et ce dans le sens d'un éloignement de ce plan de joint du plan de coupe lorsque le diamètre du légume augmente.

Elle se rapporte également à une machine pour parer les légumes pourvue de la dite pince.

L'invention sera bien comprise à l'aide de la description ci-aprés faite à titre d'exemple non limitatif en regard du dessin ci-annexé qui représente schématiquement :

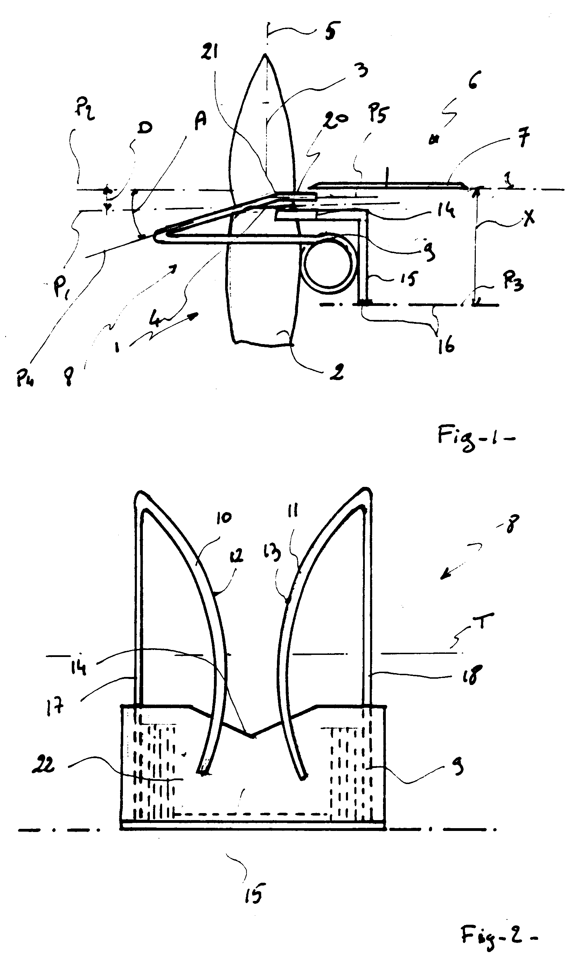

- figure 1 : en vue partielle et de profil un dispositif de séparation,
- figure 2 : en vue de dessus et à plus grande échelle, la pince,

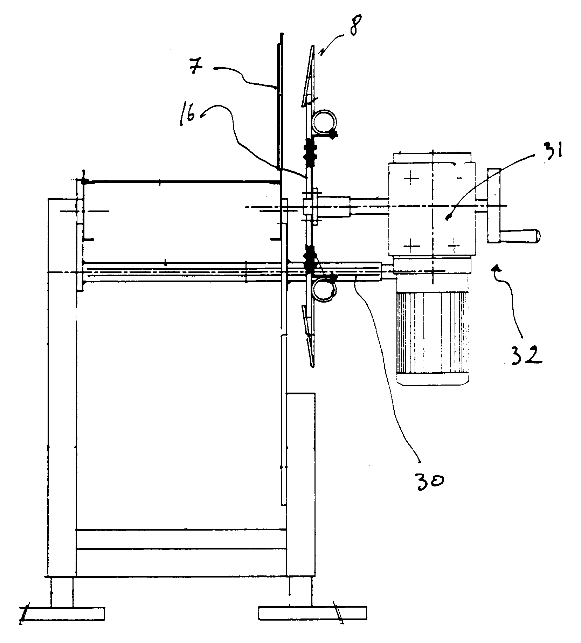

- figure 3 : en vue de profil, une machine pour parer les légumes.

En se reportant au dessin, on voit que le légume 1, tel une endive, est constitué d'une racine 2 surmontée d'une partie consommable 3 encore appelée "chicon".

Ces chicon 3 et racine 2 sont solidarisés l'un de l'autre au niveau du collet 4 qui définit un plan P1 dit de joint sensiblement perpendiculaire à l'axe longitudinal 5 du légume 1.

Pour sa commercialisation, le chicon doit être séparé de la racine.

Pour cela, on utilise une machine pour parer les légumes comprenant en outre un dispositif de séparation 6, lui-même comprenant un outil tranchant 7, tel une lame définissant un plan de coupe P2 et au moins une pince 8 qui, suivant une trajectoire T prédéterminée, maintient le légume au moins localement dans une position telle que l'axe globalement longitudinal du légume soit au moins sensiblement perpendiculaire au plan de coupe.

Notamment dans le cas de l'endive, la séparation doit se faire à une distance prédéterminée D du plan de joint P1 qui est confondu avec le plan passant par le collet 4 du légume 1.

Cette distance est fonction de la taille du légume et notamment du diamètre pris au niveau de ce collet.

Ainsi, plus le diamètre est important, plus la coupe doit être faite loin du plan de joint P1.

Classiquement, la pince 8 comporte :
- un corps 9 supportant au moins indirectement deux machoires 10, 11 présentant chacune deux surfaces 12, 13 dites de maintien, lesquelles sont disposées en vis à vis et viennent localement serrer radialement la racine 2 en deux zones quasiment ponctuelles opposées et définissent ainsi le diamètre de pincement qui se situe généralement dans le plan de joint,
- une butée 14 limitant l'engagement de la racine entre les machoires de la pince et,
- un support 15 par lequel elle est fixée à un moyen de déplacement 16 qui, sur au moins une partie de son parcours sur une trajectoire T se situe dans un plan P3 dit de référence parallèle à un plan de coupe P2 et distant de ce dernier d'une valeur prédéterminée X.

Ce moyen de déplacement 16 consiste, par exemple, en un disque 16 mû en rotation par l'intermédiaire d'un arbre 30 de rotation prenant son mouvement sur un moteur 31.

Le plan de référence P3 peut être horizontal ou vertical ou incliné par rapport à ces directions remarquables ; il suffit que la lame de coupe soit placée de manière appropriée.

Selon l'invention, les pinces sont pourvues de moyens 10, 11 qui, lorsque le légume est pincé, induisent dans un plan perpendiculaire au plan de coupe le déplacement du plan de joint en fonction au moins dans une certaine plage de dimension de l'ouverture des machoires et donc du diamètre du légume et ce dans le sens d'un éloignement de ce plan de joint du plan de coupe lorsque le diamètre du légume augmente.

Selon l'invention, pour constituer les moyens 10, 11 qui induisent le déplacement du plan de joint P1, les machoires 10, 11 de la pince 8 sont, au moins sur la majeure partie de leur longueur, inclinées par rapport au plan de coupe d'un certain angle A et définissent ainsi globalement un plan P4 dit de glissement, ce plan P4 parallèle à la trajectoire T précitée étant incliné de manière que, si l'on considère le sens d'engagement du légume entre les machoires, il se rapproche du plan de coupe.

De ce fait, en fonction de sa position au long des machoires, le diamètre de pincement se situera à des distances différentes du plan de coupe.

Selon l'invention, le corps 9 de la pince 8 forme sensiblement un U dont les branches 17, 18 sont prolongées par les machoires 10, 11 de la pince, les dits prolongements étant rabattus de manière que les machoires 10, 11 qu'ils forment se logent sensiblement entre les branches 17, 18 du U de sorte que les extrémités libres soient dirigées vers le fond de ce U.

Les machoires de la pince sont courbées et ont leur convexité tournée l'une vers l'autre.

Bien entendu, au lieu d'être dans un plan, les machoires peuvent se situer dans une surface au moins légèrement courbe pour moduler le réglage obtenu.

A partir d'une certaine dimension, la distance de coupe devenant constante, selon l'invention, les extrémités libres 20 des machoires sont ramenées dans un plan P5 dit extrême qui est sensiblement parallèle au plan de coupe.

De préférence, la longueur de ces tronçons extrêmes 20 mesurée entre la butée 14 et leur intersection 21 avec le plan de glissement P4 est au moins égale au demi-diamètre du légume 1 le plus petit qui doit être sectionné ou qui, par rapport aux diamètres indirectement supérieurs, mérite une adaptation de la position du collet par rapport au plan de coupe.

Dans une forme de réalisation avantageuse, la butée 14 est constituée par une découpe en Vé que présente une plaque 22 reliée au corps 9 de la pince 8 par un moyen d'association tel un système vis-écrou.

On comprend donc que, dans le cas de gros collets, l'axe de symétrie de la plante est d'autant plus éloigné de la butée que son diamètre est grand.

Le légume est alors pincé par les machoires dans des zones diamétrales situées dans le plan de glissement dont l'écartement du plan de coupe est fonction de cet éloignement et de l'inclinaison du plan de glissement.

Dans une forme de réalisation (non représentée), chacune des machoires 10, 11 est liée à la branche 17, 18 correspondante par un enroulement hélicoïdal apte à permettre aux machoires et notamment à leurs extrémités libres de se déplacer dans un plan perpendiculaire au plan de coupe.

Dans une autre forme de réalisation (non représentée), les branches 17, 18 de la pince sont courbes et, de préférence, leurs concavités sont tournées vers l'extérieur de la pince.

L'élasticité de la pince est alors notamment obtenue par les courbures des branches et la zone de liaison entre la branche et la machoire.

Pour compléter ces dispositions, le disque sur lequel sont montées les pinces doit être préalablement positionné par rapport à la lame de coupe.

A cet effet, l'ensemble 32 constitué par le disque 16, l'arbre de rotation 30 et le moyen moteur 31 est pourvu de moyens de réglage 32 de la distance dite de coupe prise entre le disque et l'outil tranchant.

Par exemple, l'arbre de rotation est monté coulissant et porte au moins une butée sur laquelle agit un élément de manoeuvre, tel une fourchette dite d'embrayage qui, fixée à un point fixe d'un bâti, est actionnée par un vérin qui, commandé, permet de déplacer le disque et de prérégler la distance de coupe.

Il peut s'agir également d'un système Vis-écrou mettant en oeuvre une manivelle.

Le disque est, de préférence, légèrement incliné par rapport à l'axe longitudinal d'un convoyeur à bande sur lequel tombe l'endive séparée de la racine ou, éventuellement, à l'extrémité du convoyeur à bande parallèlement à la direction transversale de ce convoyeur.

## Revendications

1. Pince pour le maintien d'un légume tel une endive portée par sa racine,
laquelle pince (8) comporte :
- un corps (9) supportant au moins indirectement deux machoires (10, 11) présentant chacune deux surfaces (12, 13) dites de maintien, lesquelles sont disposées en vis à vis et viennent localement serrer radialement la racine (2) en deux zones quasiment ponctuelles opposées et définissent ainsi le diamètre de pincement qui se situe généralement dans le plan de joint,
- une butée (14) limitant l'engagement de la racine entre les machoires de la pince et,
- un support (15) par lequel elle est fixée à un moyen de déplacement (16) qui, sur au moins une partie de son parcours sur une trajectoire (T) se situe dans un plan (P3) dit de référence parallèle à un plan de coupe (P2) et distant de ce dernier d'une valeur prédéterminée (X),
cette pince étant **CARACTERISEE** en ce qu'elle est pourvue de moyens (10, 11) qui, lorsque le légume est pincé, induisent dans un plan perpendiculaire au plan de coupe (P2) le déplacement du plan de joint (P1) en fonction au moins, dans une certaine plage de dimension, de l'ouverture des machoires et donc du diamètre du légume et ce dans le sens d'un éloignement de ce plan de joint du plan de coupe lorsque le diamètre du légume augmente.

2. Pince selon la revendication 1 **caractérisée** en ce que, pour constituer les moyens (10, 11) qui induisent le déplacement du plan de joint (P1), les machoires (10, 11) de la pince (8) sont, au moins sur la majeure partie de leur longueur, inclinées par rapport au plan de coupe d'un certain angle (A) et définissent ainsi globalement un plan (P4) dit de glissement, ce plan (P4) parallèle à la trajectoire (T) précitée étant incliné de manière que, si l'on considère le sens d'engagement du légume entre les machoires, il se rapproche du plan de coupe.

3. Pince selon la revendication 2 **caractérisée** en ce que le corps (9) de la pince (8) forme sensiblement un U dont les branches (17, 18) sont prolongées par les machoires (10, 11) de la pince, les dits prolongements étant rabattus de manière que les machoires (10, 11) qu'ils forment se logent sensiblement entre les branches (17, 18) du U de sorte que les extrémités libres soient dirigées vers le fond de ce U.

4. Pince selon la revendication 2 ou 3 **caractérisée** en ce que les machoires de la pince sont courbées et ont leur convexité tournée l'une vers l'autre.

5. Pince selon la revendication 2 ou 3 **caractérisée** en ce que les extrémités libres (20) des machoires sont ramenées dans un plan (P5) dit extrême qui est sensiblement parallèle au plan de coupe.

6. Pince selon la revendication 5 **caractérisée** en ce que la longueur des tronçons extrêmes (20) mesurée entre la butée (14) et leur intersection (21) avec le plan de glissement (P4) est au moins égale au demi-diamètre du légume (1) le plus petit qui doit être sectionné.

7. Pince selon l'une quelconque des revendications 1 à 6 **caractérisée** en ce que la butée (14) est constituée par une découpe en Vé que présente une plaque (22) reliée au corps (9) de la pince (8) par un moyen d'association.

8. Pince selon la revendication 3 **caractérisée** en ce que chacune des machoires (10, 11) est liée à la branche (17, 18) correspondante par un enroulement hélicoïdal apte à permettre aux machoires et notamment à leurs extrémités libres de se déplacer dans un plan perpendiculaire au plan de coupe.

9. Machine pour parer des légumes **caractérisée** en ce qu'elle est pourvue d'une pince selon l'une quelconque des revendications 1 à 8.

10. Machine selon la revendication 9 **caractérisée** en ce que :
- le moyen de déplacement (16) consiste en un disque (16) mû en rotation par l'intermédiaire d'un arbre (30) de rotation prenant son mouvement sur un moteur (31) et,
- l'ensemble (32) constitué par le disque (16), l'arbre de rotation (30) et le moyen moteur (31) est pourvu de moyens de réglage (32) de la distance dite de coupe prise entre le disque et l'outil tranchant.

## Claims

1. A gripping device for holding a vegetable, such as endive, carried by its root, the said gripping device (8) comprising:
- a body (9) at least indirectly supporting two jaws (10, 11), each of which has two so-called holding surfaces (12, 13) arranged facing one another and producing radial localised clamping of the root (2) in two opposite substantially localised regions, thus defining the gripping diameter which is located generally in the transition plane;
- a stop device (14) limiting the engagement of the root between the jaws of the gripping device, and
- a support (15) via which the said gripping device is fixed to a displacement means (16) which, over at least a part of its course over a trajectory (T), is located in a so-called reference plane (P3) parallel to a cutting plane (P2) and distanced from the latter by a pre-determined extent (X);
the said gripping device being **characterised in that** it is provided with means (10, 11) which, when the vegetable is gripped, bring about displacement of the transition plane (P1) in a plane perpendicular to the cutting plane (P2), at least as a function - within a certain dimensional range - of the extent of opening of the jaws and hence the diameter of the vegetable, in the context of distancing the said transition plane from the cutting plane when the diameter of the vegetable increases.

2. A gripping device according to claim 1, **characterised in that** in order to form the means (10, 11) which bring about displacement of the transition plane (P1), the jaws (10, 11) of the gripping device (8) are - at least over the majority of their length - inclined in relation to the cutting plane at a certain angle (A), thus defining overall a so-called sliding plane (P4) which is parallel to the said trajectory (T) and is inclined in such a way that it becomes closer to the cutting plane, with regard to the direction of engagement of the vegetable between the jaws.

3. A gripping device according to claim 2, **characterised in that** the body (9) of the gripping device (8) is substantially U-shaped, the limbs (17, 18) thereof being extended by the jaws (10, 11) of the gripping device, the extended portions being angled back in such a way that the jaws (10, 11) formed thereby are located substantially between the limbs (17, 18) of the U, in such a way that the free ends are directed towards the base of the U.

4. A gripping device according to claim 2 or 3, **characterised in that** the jaws of the gripping device are curved and the convex portions of the curves are turned towards one another.

5. A gripping device according to claim 2 or 3, **characterised in that** the free ends (20) of the jaws are brought into a so-called end plane (P5) which is substantially parallel to the cutting plane.

6. A gripping device according to claim 5, **characterised in that** the length of the end portions (20) measured between the stop device (14) and their intersection (21) with the sliding plane (P4) is at least equal to half the diameter of the smallest vegetable (1) for cutting.

7. A gripping device according to any one of claims 1 to 6, **characterised in that** the stop device (14) is formed by a V-shaped cut-out portion in a plate (22) connected to the body (9) of the gripping device (8) by a connection means.

8. A gripping device according to claim 3, **characterised in that** each of the jaws (10, 11) is connected to the corresponding limb (17, 18) via a helical winding capable of allowing the jaws, more particularly the free ends thereof, to be displaced in a plane perpendicular to the cutting plane.

9. A machine for trimming vegetables, **characterised in that** it is provided with a gripping device according to any one of claims 1 to 8.

10. A machine according to claim 9, **characterised in that**:
- the displacement means (16) comprises a plate (16) driven in rotation via a rotation shaft (30) driven by a motor (31); and
- the assembly (32) formed by the plate (16), the rotation shaft (30) and the driving means (31) is fitted with means (32) for controlling the so-called cutting distance between the plate and the cutting tool.

## Patentansprüche

1. Klemme zum Halten von Gemüse, beispielsweise von Chicorée, der an seiner Wurzel gehalten wird,
wobei die Klemme (8) folgendes aufweist:
- ein Hauptteil (9), welches zumindest indirekt zwei Klemmbacken (10, 11) aufweist, die jeweils zwei sogenannte Halteflächen (12, 13) aufweisen, die einander gegenüber angeordnet sind und örtlich begrenzt die Wurzel (2) in zwei quasi punktförmigen gegenüberliegenden Bereichen festklemmen und dabei den Klemmdurchmesser definieren, der sich im wesentlichen in der Ebene der Verbindungsstelle befindet,
- einen Anschlag (14), der die Erfassung der Wurzel zwischen den Klemmbacken der Klemme begrenzt, und
- einen Träger (15), mittels welchem die Klemme an einer Verschiebeeinrichtung (16) befestigt ist, die über mindestens einen Teil ihres Wegs auf einer Bahn (T) in einer sogenannten Bezugsebene (P3) liegt, welche parallel zu einer Schnittebene (P2) in einem Abstand von dieser mit vorgegebenem Wert (X) verläuft,
**dadurch GEKENNZEICHNET**, daß sie mit Einrichtungen (10, 11) ausgestattet ist, welche dann, wenn das Gemüse festgeklemmt wird, in einer zur Schnittebene (P2) senkrechten Ebene die Verschiebung der Ebene der Verbindungsstelle (P1) zumindest in Abhängigkeit vom Öffnungsgrad der Klemmbacken innerhalb eines bestimmten Abmessungsbereichs und damit vom Durchmesser des Gemüses herbeiführen, und zwar in Richtung einer Entfernung von dieser Ebene der Verbindungsstelle von der Schnittebene, wenn sich der Durchmesser des Gemüses vergrößert.

2. Klemme nach Anspruch 1, **dadurch gekennzeichnet**, daß zur Bildung der Einrichtungen (10, 11), welche die Verschiebung der Ebene der Verbindungsstelle (P1) herbeiführen, die Klemmbacken (10, 11) der Klemme zumindest über den größeren Teil ihrer Länge bezüglich der Schnittebene um einen bestimmten Winkel (A) geneigt sind und so ganz allgemein eine sogenannte Gleitebene (P4) definieren, wobei diese zur vorgenannten Bahn parallele Ebene (P4) so geneigt ist, daß sie sich bei Berücksichtigung der Richtung, in der das Gemüse zwischen den Klemmbacken erfaßt wird, an die Schnittebene annähert.

3. Klemme nach Anspruch 2, **dadurch gekennzeichnet**, daß das Hauptteil (9) der Klemme (8) im wesentlichen ein U bildet, dessen Schenkel (17, 18) sich in den Klemmbacken (10, 11) der Klemme fortsetzen, wobei diese Fortsätze so umgeschlagen sind, daß die Klemmbacken (10, 11), welche sie bilden, im wesentlichen zwischen den U-Schenkeln (17, 18) so liegen, daß die freien Enden zum Abschlußbogen dieses U hin gerichtet sind.

4. Klemme nach Anspruch 2 oder 3, **dadurch gekennzeichnet**, daß die Klemmbacken der Klemme gebogen sind, und daß deren konvexe Ausbildungen einander zugewandt sind.

5. Klemme nach Anspruch 2 oder 3, **dadurch gekennzeichnet**, daß die freien Enden (20) der Klemmbacken in eine sogenannte Endebene (P5) zurückgeführt sind, die im wesentlichen parallel zur Schnittebene verläuft.

6. Klemme nach Anspruch 5, **dadurch gekennzeichnet**, daß die Länge der äußeren Abschnitte (20), gemessen zwischen dem Anschlag (14) und deren Schnittpunkt (21) mit der Gleitebene (P4), zumindest gleich dem halben kleinsten Durchmesser des Gemüses ist, das zu schneiden ist.

7. Klemme nach einem der Ansprüche 1 bis 6, **dadurch gekennzeichnet**, daß der Anschlag (14) aus einem V-Einschnitt besteht, welchen eine mit dem Hauptteil (9) der Klemme (8) über eine Verbindungseinrichtung verbundene Platte (22) aufweist.

8. Klemme nach Anspruch 3, **dadurch gekennzeichnet**, daß jede der Klemmbacken (10, 11) mit dem entsprechenden Schenkel (17, 18) über eine wendelförmige Wicklung verbunden ist, die so ausgebildet ist, daß sie eine Verschiebung der Klemmbacken und insbesondere von deren freien Enden in einer zur Schnittebene senkrechten Ebene gestattet.

9. Maschine zum Putzen von Gemüse, **dadurch gekennzeichnet**, daß sie eine Klemme nach einem der Ansprüche 1 bis 8 aufweist.

10. Maschine nach Anspruch 9, **dadurch gekennzeichnet**, daß
- die Verschiebeeinrichtung (16) aus einer Scheibe (16) besteht, die mittels einer von einem Motor (31) aus angetriebenen Drehwelle (30) unter Drehung bewegbar ist, und
- daß die von der Scheibe (16), der Drehwelle (30) und der Antriebseinrichtung (31) gebildete Gesamtanordnung mit einer Einrichtung (32) zum Regeln des sogenannten Schnittabstands ausgerüstet ist, der zwischen der Scheibe und dem Schnittwerkzeug gemessen wird.
